# EUROPEAN PATENT SPECIFICATION

(11) **EP 1 313 805 B1**
(45) Date of publication and mention of the grant of the patent: **28.03.2007**
(21) Application number: 01974990.2
(22) Date of filing: 22.08.2001
(51) Int. Cl.: C08L 23/04, C08L 23/10, C08L 23/16, C08K 5/00, C08L 21/00

(54) **THERMOPLASTIC ELASTOMER WITH IMPROVED LOW TEMPERATURE PROPERTIES**
THERMOPLASTISCHE ELASTOMERZUSAMMENSETZUNG MIT VERBESSERTEN NIEDERTEMPERATUREIGENSCHAFTEN
ELASTOMERE THERMOPLASTIQUE A PROPRIETES SOUS FAIBLE TEMPERATURE AMELIOREES

(30) Priority: 30.08.2000 NL 1016055
(43) Date of publication of application: 28.05.2003
(73) Proprietor: DSM IP Assets B.V., 6411 TE Heerlen (NL)
(72) Inventor: SCHMIDT, Angelika, NL-6166 JR Sittard (NL); SOLIMAN, Maria, NL-6118 AN Nieuwstadt (NL); TACX, Jacobus, Christinus, Josephus, Franciscus, NL-6041 XN Roermond (NL); WILLEMS, Edwin, NL-6136 BV Sittard (NL)
(74) Representative: Dorrestijn, Antoon
(86) International application number: PCT/NL2001/000619
(87) International publication number: WO 2002/018487

(56) References cited:
- EP-A- 0 742 268
- WO-A-98/44041
- US-A- 4 645 791

## Description

The invention relates to a thermoplastic elastomer composition comprising:
a) at least one thermoplastic polyolefinic polymer
b) at least one dynamically vulcanized rubber
   in which the quantity of a) is 10-90 % by weight and the quantity of b) is 90-10 % by weight relative to the total quantity of thermoplastic polyolefinic polymer and rubber, and
c) 1-250 parts of oil per 100 parts of rubber.

Such thermoplastic elastomer compositions are known from US-A-4311628. The thermoplastic elastomer compositions comprise a blend of a thermoplastic polyolefinic polymer, a dynamically vulcanized rubber and mineral type of extender oil such as aromatic, naphtalenic or paraffinic oil or mixtures thereof. A drawback of the described thermoplastic elastomer compositions is the fact that they have poor low temperature impact properties, especially for high hardness compositions. This poor low temperature impact performance can be ascribed to the presence of the thermoplastic polyolefinic polymer in the thermoplastic elastomer composition. The higher the quantity of thermoplastic polyolefinic polymer the worse the low temperature impact performance.

The object of the present invention is to completely or largely eliminate the stated drawback.

This object is achieved according to the invention by the thermoplastic elastomer composition comprising an isoparaffinic oil.

Surprisingly, it has been found that the thermoplastic elastomer compositions according to the invention show very good low temperature impact properties. A further advantage is that the thermoplastic elastomer compositions show a good UV resistance. Moreover the thermoplastic elastomer compositions have a low fogging value which makes them suitable for use in for example automotive interior applications.

From EP-A-315363 it is known to prepare EPDM compositions comprising a polyalphaolefinic oil. However, EP-A-315363 is silent about the impact resistance of the EPDM compositions and does not mention nor suggest thermoplastic elastomers.

Thermoplastic elastomer compositions which comprise dynamically vulcanized rubber are known per se and are described in general terms in "Handbook of Thermoplastic Elastomers, by B.M. Walker/C.P. Rader, chapter 4, Elastomeric Alloy Thermoplastic Vulcanisates, Van Nostrand Reinhold, New York, 1988".

Suitable thermoplastic polyolefinic polymers in the thermoplastic elastomer composition according to the invention are the thermoplastic polyolefins known per se. Examples of these thermoplastic polyolefins are polyethylene, polypropylene, random or block copolymers of polypropylene, polybutene, polymethylpentene or copolymers of ethylene with alphaolefins such as a copolymer of ethylene and 1-butene or ethylene and 1-octene.

Preferably the thermoplastic elastomer composition comprises polyethylene or polypropylene as thermoplastic polyolefin.

A suitable quantity of the thermoplastic polyolefinic polymer in the thermoplastic elastomer composition according to the invention is between 10-90 % by weight relative to the total quantity of thermoplastic polyolefinic polymer and rubber. Preferably the quantity of the thermoplastic,polyolefinic polymer is between 20-85 % by weight relative to the total quantity of thermoplastic polyolefinic polymer and rubber.

Suitable rubbers in the thermoplastic elastomer composition according to the invention are rubbers that can be dynamically vulcanized. During the preparation of the thermoplastic elastomer composition, the rubber and the thermoplastic polyolefinic polymer are heated and mixed, with the rubber being vulcanized. Such vulcanization is referred to as dynamic vulcanization because it takes place during the melt mixing of the thermoplastic elastomer composition. The dynamically vulcanized rubber in the thermoplastic elastomer composition is dispersed in a matrix of the thermoplastic polyolefinic polymer. Examples of suitable rubbers are the following rubbers or a mixture thereof: SBR (styrenebutadiene rubber, copolymer of styrene and butadiene), NBR (nitrile rubber, copolymer of butadiene and acrylonitrile), IIR (butyl rubber, copolymer of isobutene and isoprene) or BR (butadiene rubber). Other examples of suitable rubbers are styrene-containing block copolymers: SBS (Styrene butadiene block copolymer), SEBS (styrene ethylene/butadiene styrene block copolymer), SIPS (styrene isoprene block copolymer).

Yet more examples of suitable rubbers are olefinic rubbers; these are rubbers based on homopolymers and copolymers of polyolefinic polymers. Examples of these are EPDM rubber (copolymer of ethylene, propylene and a third monomer) or a mixture of EPM rubber (copolymer of ethylene and propylene) and EPDM rubber.

Preferably, the dynamically vulcanized rubber in the thermoplastic elastomer composition according to the invention is an olefinic rubber. It is especially preferred for the dynamically vulcanized rubber in the thermoplastic elastomer composition according to the invention to be a copolymer of ethylene, propylene and a third monomer (EPDM) or a mixture of EPDM and a copolymer of ethylene and propylene (EP) or a copolymer of ethylene with a higher alphaolefin or a mixture of EPDM, EP, styrene butadiene block copolymer (SBS) and/or styrene ethylene/butadiene styrene block copolymer (SEBS).

A suitable quantity of the dynamically vulcanized rubber in the thermoplastic elastomer composition according to the invention is between 90-10 % by weight relative to the total quantity of thermoplastic polyolefinic polymer and rubber. Preferably, the quantity of the dynamically vulcanized rubber is between 80-15 % by weight relative to the total quantity of thermoplastic polyolefinic - polymer and rubber.

The thermoplastic elastomer composition according to the invention comprises between 1-250 parts of oil per 100 parts of rubber. Preferably the quantity of oil is between 50-200 parts per 100 parts of rubber. It is especially preferred for the thermoplastic elastomer composition to comprise between 100-160 parts of oil per 100 parts of rubber.

Any known isoparaffinic oil may be used in the thermoplastic elastomer composition according to the invention. Isoparaffinic oil is also known as polyalfaolefinic oil which is a colourless, odourless, isoparaffinic, synthetic fluid of high purity composed of hydrogenated oligomers. Polyalfaolefinic oil comprises oligomers of alphaolefins which contain alphaolefin monomer units of at least 3 carbon atoms. Examplary oligomers of alphaolefins contain monomer units with from 6 to 12 carbon atoms. Preferred oligomers of alphaolefins contain monomers with 10 carbon atoms. Preferably, use is made of isoparaffinic oil with a weight-average molecular weight of 1000 g/mole or lower. Isoparaffinic oil with a weight-average molecular weight of between 250 and 700 g/mole is especially preferred. Isoparaffinic oil with a weight-average molecular weight of between 400 and 600 g/mole is even more preferred.

In the thermoplastic elastomer composition according to the invention there may be present, besides the isoparaffinic oil, for example one or more other oils. Suitable oils that may be used in addition to the isoparaffinic oil are for example mineral paraffinic oil, naphthenic oil, aromatic oil or mixtures thereof. Preferably a highly hydrogenated oil is used in which the concentration of aromatic compounds is preferably less than 4 wt% and the concentration of polar compounds is less than 0.3 wt.%. An example of such oil is PennzUltra (TM) 1199, supplied by Pennzoil in the United States of America. The quantity of isoparaffinic oil in the thermoplastic elastomer composition according to the invention is preferably at least 25 % by weight of the total quantity of oil. More preferably the thermoplastic elastomer composition comprises at least 50 % by weight isoparaffinic oil relative to the total quantity of oil.

In addition, the thermoplastic elastomer composition according to the invention may comprise customary and known additives. Examples of such additives are fillers, reinforcing agents, colourants and stabilizers.

A process for producing the thermoplastic elastomer compositions which comprise dynamically vulcanized rubber is known per se and is described in general terms in US-A-4,311,628. That process is suitable for producing the thermoplastic elastomer composition according to the invention. A suitable process comprises for example mixing and heating the thermoplastic polyolefinic polymer with the rubber, the vulcanising agent and additives, if any, at a temperature above the melting point of the thermoplastic polyolefinic polymer in which the rubber is dynamically vulcanized and the thermoplastic elastomer composition is formed.

The point in time at which the oil that is present in the thermoplastic elastomer composition according to the invention is metered is not critical. In the process, the oil is added for example before or after the dynamic vulcanization of the rubber. It is also possible for the oil to be added partly before and partly after the dynamic vulcanization of the rubber. It is also possible for the rubber used to be pre-mixed with the desired quantity of oil or a proportion thereof.

Suitable vulcanizing agents for the thermoplastic elastomer composition according to the invention are the vulcanizing agents known per se for vulcanizing the stated rubbers. Examples of suitable vulcanizing agents are phenol resins, peroxide, alkoxysilane and hydrosilane compounds.

The above-mentioned process for producing the thermoplastic elastomer composition according to the invention may be carried out with the aid of items of equipment known per se. Examples of suitable items of equipment are extruders, mixers and kneaders.

The thermoplastic elastomer composition according to the invention may be used in moulded articles which are applied in cars, equipment and constructions. Examples hereof are airbag covers, fuel lines, hoses, dashboard foils, door panels, spoilers, mud flaps, seals, boots, strips and exterior trim.

The invention is elucidated with reference to the following examples, without being limited thereto.

### Example I

The following materials were metered to a ZSK40 40-mm twinscrew extruder:
100 parts by weight of EPDM rubber (Kelfan© 509 supplied by DSM)
250 parts by weight of polypropylene (Stamylan© P13E10 supplied by DSM)
10 parts by weight of talc (of Sigma-Aldrich)
5 parts by weight of zinc oxide (ZnO supplied by Sigma-Aldrich)
1 part by weight of zinc stearate (supplied by Sigma-Aldrich)
1.5 parts by weight of phenol resin (SP1045 supplied by Schenectady)
1 part by weight of tin(II)chloride (SnCl₂.2H₂O supplied by Alldrich)
1.5 parts by weight of antioxidant (Irganox © 1076 supplied by Ciba Geigy)
140 parts by weight of isoparaffinic oil (Nexbase © 2006 supplied by Neste).
The extruder heating system had been adjusted to a temperature of 205°C.
The metered materials were mixed, in which process the EPDM rubber was dynamically vulcanized. Thermoplastic elastomer composition I was obtained in the process.
Test specimens were prepared from thermoplastic elastomer I and their properties were measured according to the test standards stated in Table 1.

**Table 1**

| Property | Test standard |
|---|---|
| Hardness | DIN 53505 |
| Tensile strength | ISO 37 |
| Modulus 100% | ISO 37 |
| Modulus 300% | ISO 37 |
| Elongation at break | ISO 37 |
| Compression set, 70 h/23°C | ISO 815/B |
| Compression set, 22 h/70°C | ISO 815/B |
| Notched Izod -45°C | ISO 180/4 A |
| Fogging | DIN 75201/B |
| UV test surface | P.S.A. D47 1431/-G (1992) |

The results of the performed tests are shown in Table 3.

### Comparative experiment A

The isoparaffinic oil of Example I was replaced by an equal quantity of mineral paraffinic oil, Sunpar©150, from Sun Oil.
The applied quantities of the various components are stated in Table 2.
The properties of thermoplastic elastomer A were determined according to the tests in Table 1. The results are stated in Table 3.

### Example II

A proportion of the isoparaffinic oil, 50 parts by weight, of Example I was replaced by an equal quantity of a mineral paraffinic oil, Sunpar©150, from Sun Oil.
The applied quantities of the various components are stated in Table 2.
The properties of thermoplastic elastomer II were determined according to the tests of Table 1. The results are stated in Table 3.

### Example III

The oil of example I was replaced by 60 parts by weight of isoparaffinic oil (Nexbase©2004 from Neste) and 100 parts by weight of Sunpar© 150.
The quantity polypropylene was lowered to 40 parts by weight.
The quantity of talc was increased to 30 parts by weight and the quantity of phenol resin was increased to 3.5 parts by weight.
The applied quantities of the various components are stated in Table 2.
The properties of thermoplastic elastomer III were determined according to the tests of Table 1. The results are stated in Table 3.

**Table 2**

| Composition of the examples and comparative experiment A. | | | | |
|---|---|---|---|---|
| Quantities are expressed as parts by weight. | | | | |
| Material | I | A | II | III |
| Keltan® 509 | 100 | 100 | 100 | 100 |
| Stamylan® P13E10 | 250 | 250 | 250 | 40 |
| Talc | 10 | 10 | 10 | 30 |
| ZnO | 5 | 5 | 5 | 5 |
| Zinc stearate | 1 | 1 | 1 | 1 |
| SP1045 | 1.5 | 1.5 | 1.5 | 3.5 |
| SnCl₂.2H₂O | 1 | 1 | 1 | 1 |
| Irganox® 1076 | 1.5 | 1.5 | 1.5 | 1.5 |
| Nexbase® 2006 | 140 | | 90 | |
| Nexbase® 2004 | | | | 60 |
| Sunpar® 150 | | 140 | 50 | 100 |
| | | | | |

**Table 3. Test results**

| Test | Unit | I | A | II | III |
|---|---|---|---|---|---|
| Hardness | Shore A or Shore D | 42 D | 43D | 43 D | 58 A |
| Tensile strength | MPa | 15.0 | 15.1 | 15.1 | 3.8 |
| Modulus 100% | MPa | 11.1 | 11.1 | 11.0 | 2.2 |
| Modulus 300% | MPa | 11.8 | 12 | 11.9 | 3.9 |
| Elongation at break | % | 623 | 643 | 604 | 310 |
| Compression set, 70 h/23°C | % | 41 | 43 | 42 | 20 |
| Compression set, 22 h/70°C | % | 56 | 58 | 58 | 29 |
| Notched Izod -45°C | - | Tough fracture | Brittle fracture | Tough fracture | Tough fracture |
| Notched Izod energy | KJ/m2 | 64 | 8 | 56 | 59 |
| Fogging | mg | 1.6 | 1.5 | 1.2 | 1.0 |
| UV test surface | - | No Change | No change | No Change | None Change |

Analysis of the test results in Table 3 indicate that thermoplastic elastomer compositions comprising isoparaffinic oil show improved low temperature impact properties in comparison with thermoplastic elastomer compositions comprising only mineral paraffinic oil.

## Claims

1. Thermoplastic elastomeric composition comprising:
a) at least one thermoplastic polyolefinic polymer
b) at least one dynamically vulcanized rubber in which the quantity of a) is 10-90 % by weight and the quantity of b) is 90-10 % by weight relative to the total quantity of thermoplastic polyolefinic polymer and rubber and
c) 1-250 parts of oil per 100 parts of rubber,
**characterised in that** the oil is a mixture of an isoparaffinic oil and a paraffinic, naphthenic or aromatic oil.

2. Thermoplastic elastomeric composition according to Claim 1, **characterized in that** the quantity of isoparaffinic oil is at least 25% by weight relative to the quantity of oil.

3. Thermoplastic elastomeric composition according to any one of claims 1-2 **characterized in that** the quantity of isoparaffinic oil is at least 50% by weight relative to the total quantity of oil.

4. Thermoplastic elastomeric composition according to any one of claims 1-3 **characterized in that** the quantity of oil is between 100-160 parts per 100 parts of rubber.

5. Thermoplastic elastomeric composition according to claim 1-4 **characterised in that** the thermoplastic polyolefinic polymer is polyethylene or polypropylene.

6. Thermoplastic elastomeric composition according to claim 1 **characterized in that** the dynamically vulcanized rubber is a copolymer of ethylene, propylene and a third monomer (EPDM) or a mixture of EPDM and a copolymer of ethylene and propylene (EPM) or a copolymer of ethylene with a higher alphaolefin or a mixture of EPDM, EPM, styrene butadiene block copolymer (SBS) and/or styrene ethylene/butadiene styrene block copolymer (SEBS).

7. Moulded articles comprising a thermoplastic elastomeric composition according to claims 1-6.

8. Use of a thermoplastic elastomer composition according to any one of claims 1-6 in airbag covers, fuel lines, hoses, dashboard foils, spoilers, mud flaps, seals, boots, strips.

9. Use of a thermoplastic elastomer composition comprising:
a) at least one thermoplastic polyolefinic polymer
b) at least one dynamically vulcanized rubber in which the quantity of a) is 10-90 % by weight and the quantity of b) is 90-10 % by weight relative to the total quantity of thermoplastic polyolefinic polymer and rubber and
c) 1-250 parts of oil per 100 parts of rubber,
**characterized in that** the oil is an isoparaffinic oil, in airbag covers, fuel lines, hoses, dashbord foils, spoilers, mud flaps, seals, boots, strips and exterior trim.

## Patentansprüche

1. Thermoplastische Elastomerzusammensetzung, umfassend:
a) mindestens ein thermoplastisches polyolefinisches Polymer;
b) mindestens einen dynamisch vulkanisierten Kautschuk, wobei die Menge von a) 10 - 90 Gew.-% und die Menge von b) 90 - 10 Gew.-%, auf die Gesamtmenge an thermoplastischen polyolefinischem Polymer und Kautschuk bezogen, beträgt,
(c) 1 - 250 Teile Öl pro 100 Teile Kautschuk,
**dadurch gekennzeichnet, dass** das Öl eine Mischung von einem isoparaffinischen Öl und einem paraffinischen, naphthenischen oder aromatischen Öl ist.

2. Thermoplastische Elastomerzusammensetzung nach Anspruch 1, **dadurch gekennzeichnet, dass** die Menge an isoparaffinischem Ö1 mindestens 25 Gew.-%, auf die Menge an Öl bezogen, beträgt.

3. Thermoplastische Elastomerzusammensetzung nach einem der Ansprüche 1 - 2, **dadurch gekennzeichnet, dass** die Menge an isoparaffinischem Öl mindestens 50 Gew.-%, auf die Gesamtmenge an Öl bezogen, beträgt.

4. Thermoplastische Elastomerzusammensetzung nach einem der Ansprüche 1 bis 3, **dadurch gekennzeichnet, dass** die Menge an Öl zwischen 100 - 160 Teilen pro 100 Teilen Kautschuk liegt.

5. Thermoplastische Elastomerzusammensetzung nach Anspruch 1 - 4, **dadurch gekennzeichnet, dass** das thermoplastische polyolefinische Polymer Polyethylen oder Polypropylen ist.

6. Thermoplastische Elastomerzusammensetzung nach Anspruch 1, **dadurch gekennzeichnet, dass** der dynamisch vulkanisierte Kautschuk ein Copolymer von Ethylen, Propylen und einem dritten Monomer (EDPM) oder eine Mischung von EPDM und einem Copolymer von Ethylen und Propylen (EPM) oder ein Copolymer von Ethylen mit einem höheren AlphaOlefin oder eine Mischung von EPDM, EPM, Styrolbutadien-Blockcopolymer (SBS) und/oder Styrol-Ethylen/Butadien-Styrol-Blockcopolymer (SEBS) ist.

7. Geformte Artikel umfassend eine thermoplastische Elastomerzusammensetzung nach den Ansprüchen 1 - 6.

8. Verwendung einer thermoplastischen Elastomerzusammensetzung nach einem der Ansprüche 1 - 6 in Airbagabdeckungen, Kraftstoffleitungen, Schläuchen, Armaturenbrettfolien, Bremsklappen, Schmutzfängern, Dichtungen, Schutzkappen, Haubenbändern.

9. Verwendung einer thermoplastischen Elastomerzusammensetzung, umfassend:
a) mindestens ein thermoplastisches polyolefinisches Polymer;
b) mindestens einen dynamisch vulkanisierten Kautschuk, wobei die Menge von a) 10 - 90 Gew.-% und die Menge von b) 90 - 10 Gew.-%, auf die Gesamtmenge an thermoplastischem polyolefinischem Polymer und Kautschuk bezogen, beträgt und
(c) 1 - 250 Teile Öl pro 100 Teile Kautschuk,
**dadurch gekennzeichnet, dass** das Öl ein isoparaffinisches Öl ist, in Airbagabdeckungen, Kraftstoffleitungen, Schläuchen, Armaturenbrettfolien, Bremsklappen, Schmutzfängern, Dichtungen, Schutzkappen, Haubenbändern und der Außenausstattung ist.

## Revendications

1. Composition élastomère thermoplastique comprenant:
a) au moins un polymère polyoléfinique thermoplastique,
b) au moins un caoutchouc vulcanisé par un procédé dynamique dans lequel la quantité de a) est de 10-90% en poids et la quantité de b) est de 90-10% en poids par rapport à la quantité totale de polymère polyoléfinique thermoplastique et de caoutchouc, et
c) 1-250 parties d'huile pour 100 parties de caoutchouc,
**caractérisée en ce que** l'huile est un mélange d'une huile isoparaffinique et d'une huile paraffinique, naphténique ou aromatique.

2. Composition élastomère thermoplastique selon la revendication 1 **caractérisée en ce que** la quantité d'huile isoparaffinique est d'au moins 25% en poids par rapport à la quantité d'huile.

3. Composition élastomère thermoplastique selon l'une quelconque des revendications 1-2 **caractérisée en ce que** la quantité d'huile isoparaffinique est d'au moins 50% en poids par rapport à la quantité totale d'huile.

4. Composition élastomère thermoplastique selon l'une quelconque des revendications 1-3 **caractérisée en ce que** la quantité d'huile est comprise entre 100 et 160 parties pour 100 parties de caoutchouc.

5. Composition élastomère thermoplastique selon les revendications 1-4 **caractérisée en ce que** le polymère polyoléfinique thermoplastique est du polyéthylène ou du polypropylène.

6. Composition élastomère thermoplastique selon la revendication 1 **caractérisée en ce que** le caoutchouc vulcanisé par un procédé dynamique est un copolymère d'éthylène, de propylène et d'un troisième monomère (EPDM) ou un mélange d'EPDM et d'un copolymère d'éthylène et de propylène (EPM) ou un copolymère d'éthylène avec une alpha-oléfine supérieure ou un mélange d'EPDM, d'EPM, de copolymère séquencé styrène-butadiène (SBS) et/ou de copolymère séquencé styrène-éthylène/butadiènestyrène (SEES).

7. Articles moulés comprenant une composition élastomère thermoplastique selon les revendications 1-6.

8. Utilisation d'une composition élastomère thermoplastique selon l'une quelconque des revendications 1-6 dans des couvercles d'airbags, des tuyaux de carburant, des tuyaux souples, des feuilles de tableau de bord, des becquets, des bavettes garde-boue, des joints, des protecteurs, des bandes.

9. Utilisation d'une composition élastomère thermoplastique comprenant:
a) au moins un polymère polyoléfinique thermoplastique,
b) au moins un caoutchouc vulcanisé par un procédé dynamique dans lequel la quantité de a) est de 10-90% en poids et la quantité de b) est de 90-10% en poids par rapport à la quantité totale de polymère polyoléfinique thermoplastique et de caoutchouc, et
c) 1-250 parties d'huile pour 100 parties de caoutchouc,
**caractérisée en ce que** l'huile est une huile isoparaffinique, dans des couvercles d'airbags, des tuyaux de carburant, des tuyaux souples, des feuilles de tableau de bord, des becquets, des bavettes garde-boue, des joints, des protecteurs, des bandes et des garnitures extérieures.
